# EUROPEAN PATENT APPLICATION

(11) **EP 1 160 041 A2**
(43) Date of publication of application: **05.12.2001**
(21) Application number: 01850080.1
(22) Date of filing: 02.05.2001
(51) Int. Cl.: B23D 59/00, B23Q 11/00

(54) **Saw dust sealing device**

(30) Priority: 05.05.2000 SE 0001654
(71) Applicant: Renholmens Mekaniska Verkstad AB, 930 47 Byske (SE)
(72) Inventor: HOLMQVIST, BO, 930 47 Byske (SE)
(74) Representative: Onn, Thorsten

(57) **Abstract**

The invention concerns a device in sawmills for scaling two separate areas from each other, between which runs a transporter (2) for carrying continuous pieces of wood (1) lying transverse to the direction of transport. The invention is characterised by the device comprising at least one U-shaped sheet (5 and 5' respectively) stretching across the transporter with its bulge (12) continuously being drawn by the motion of the transporter (2) over the pieces of wood (1) being carried on the transporter.

## Description

The present invention concerns a device in sawmills for separating two areas as described in the preamble to Claim 1.

Pieces of wood, transported transversely on transporters, are cut in, for example, trimming saws and raw sorting plants at sawmills. The cutting process, which is performed with cutting equipment of various models with one or more crosscutting saws, results in sawdust being spread in the surrounding areas. This impacts negatively on the environment and contaminates machinery.

The ambition is therefore to limit the spread of sawdust to only a limited area in conjunction with the cross-cutting saw or saws, while connecting, adjacent equipment and area(s) are not affected by this emission but are sealed from the adjacent area. This sealing is achieved in a conventional manner using flaps or skirts of rubber or plastic, which are drawn over the transporters and the pieces of wood on them. Types of brushes can also be used to seal the opening, which must be present in order to allow the wood to leave the transporter. These known solutions emit considerable amounts of noise and are above all inefficient for sealing between two areas. At the high speeds - a rate of 160 - used in modern sawmills, the existing skirts or flaps and brushes will lift from the pieces of wood, whereby sawdust is able to penetrate or is drawn with the gaps that form above the pieces of wood.

By means of the present invention, as presented in the characteristics section of the claims, a sealing is achieved that efficiently seals between two areas along the transporter in a sawmill and operates without emitting disturbing noise levels.

The invention will be described more fully with examples referring to drawings, where **Fig. 1** illustrates examples of two versions of the invention built into a cutting unit stationed at a sawmill, **Fig. 2** illustrates one of the versions of the invention applied downward from the cross-cutting saws and **Fig. 3** illustrates another version of the invention located forward from the cross-cutting saw.

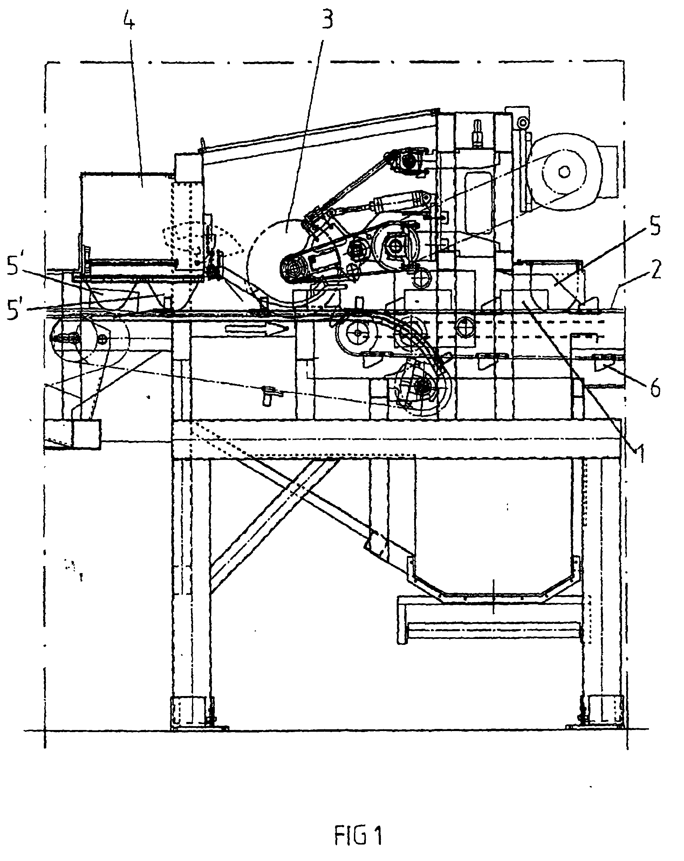

A cutting unit is illustrated in Fig. 1, through which pieces of wood 1 are transported transversely on a multiple section transporter in the cutting unit, generally designated 2. 6 designates pushers mounted on the transporter for moving the pieces of wood 1. Concerning the cutting station, reference is made in this conjunction to Swedish patent application 9900044-0, whereby a more detailed description of the illustrated cutting unit is not necessary here. 3 designates adjacent mounted crosscutting saws, from which the majority of sawdust is collected in a sawdust channel 4 in the transporter.

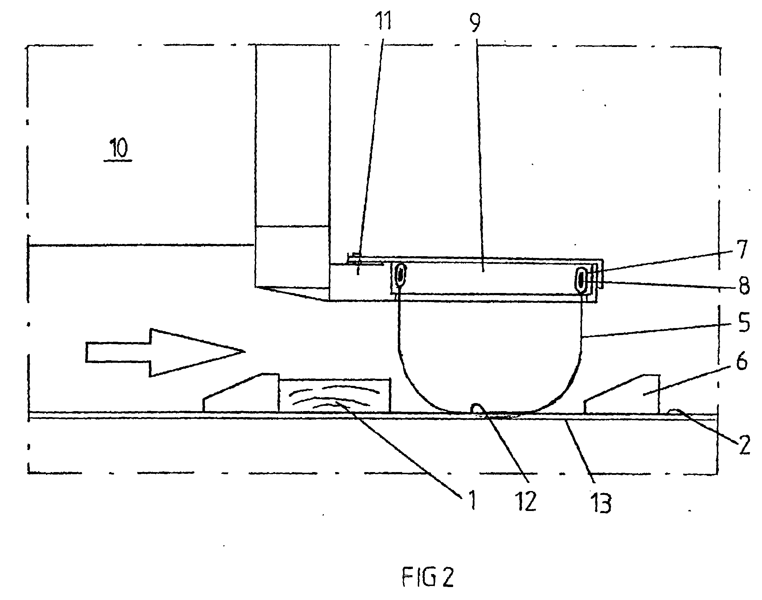

Figs. 1 and 2 illustrate a version of the invention in the form of a U-shaped sheet 5, which is suspended across the transporter 2. The sheet 5 has buckles or channels 7 along its two edges in which carrying and stiffening bodies, such as continuous flat irons 8, are inserted and suspended from e.g. a detachable cartridge 9, supported from a frame 11 attached to the cutting unit stand 10. The sag or bulge 12 of the U-shaped sheet 5 drops so low that it will reach the transporter 2 and between chains of applied cover plates 13 of known type and consequently also the pieces of wood 1 on the transporter 2. During transport, these pieces will consequently be pulled under the sheet 5, which, due to its form, will be in continuous contact with the pieces of wood 1 passing beneath.

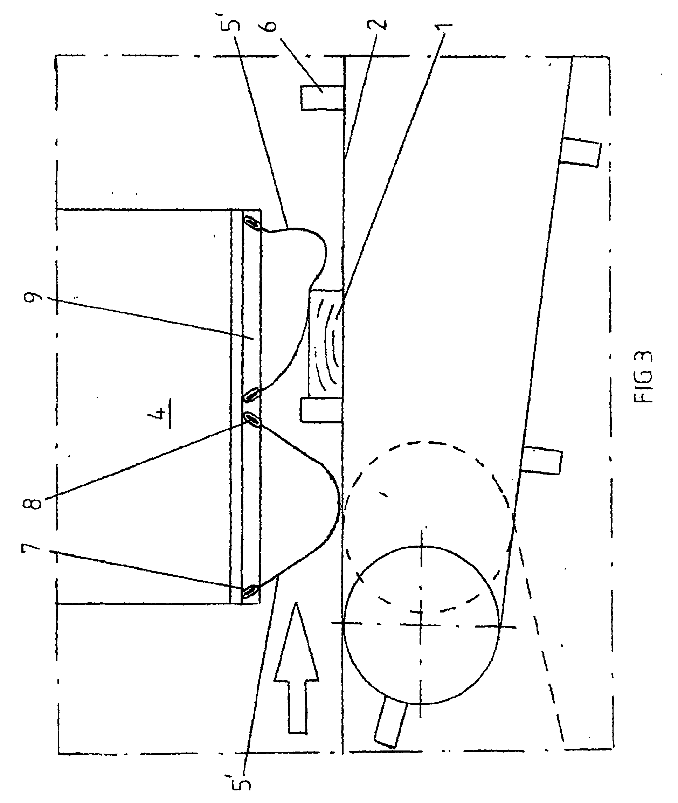

Figs. 1 and 3 illustrate another version of the invention located forward of the crosscutting saws 3. The invention illustrated here comprises two pieces of continuous, U-shaped sheet 5' stretched across the transporter 2. In principle, the design of these adjacent sheets 5' is the same as the single sheet 5 as illustrated in Fig.2. Into the buckles or channels 7 of the sheets are inserted hoops 8, which are inserted and suspended from, for example, a detachable cartridge 9 attached to the cutting unit's sawdust channel 4. As implied in Fig. 3, a piece of wood 1 is placed under the existing downward sheet 5', the bulge 12 of which will drag against the piece of wood on its way past the sheet without the sheet lifting from the piece of wood. The aforementioned cover plates are also present at this location but have not been illustrated.

By implication, the location of, for example, the U-shaped sheets 5' in relation to the cross-cut saws 3 is such that the sheets 5' will seal against a piece of wood 1 while a preceding piece of wood is being cut, thereby achieving optimum sealing effect from the sheets both during and in between cutting operations. Correspondingly, the same applies to the location of sheet 5, which is to be such that optimum sealing effect is achieved at the point in time when sawdust reaches the area of the sheet.

The sheets 5 and 5' respectively can easily be attached and detached using a suitably designed cartridge and the flat irons 8 inserted in buckles or channels 7.

In compliance with the invention, the sheets will follow the motion of the pieces of wood in a pliant manner and will not be thrown up, as are conventional types of seal when speed is increased to, for example, a rate of 160. It is to be implied that the sealing effect can be improved by arranging more than two consecutive sealing sheets. In certain cases, it may be suitable to divide the sealing sheet hanging across the transporter into several pieces.

## Claims

1. Device in sawmill for sealing two separate areas from each other, between which runs a transporter (2) for transporting continuous pieces of wood (1) placed transverse to the direction of transport, **characterised by** the device comprising at least one U-shaped hanging sheet (5 and 5' respectively) suspended across the transporter, the bulge (12) of the sheet being in continuous contact with and drawn over the transported wood (1) by the motion of the transporter (2).

2. Device in accordance with claim 1 **characterised by** one of the areas comprises one or more crosscut saws (3) for cutting pieces of wood (1).

3. Device according to claim 1 or 2, **characterised by** one or more sheets (5, 5') being suspended by its edges across the transporter (2) from one or more cartridges (9).

4. Device according to claim 3, **characterised by** the edges being fitted with buckles or channels (7), in which carrying and stiffening bodies (8) are inserted.
